(19) Europäisches Patentamt
European Patent Office
Office européen des brevets

(11) **EP 2 801 487 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**25.10.2023 Patentblatt 2023/43**

(45) Hinweis auf die Patenterteilung:
**30.12.2020 Patentblatt 2020/53**

(21) Anmeldenummer: **14001578.5**

(22) Anmeldetag: **06.05.2014**

(51) Internationale Patentklassifikation (IPC):
**B60D 1/06** *(2006.01)* **B60D 1/52** *(2006.01)*
**B60D 1/54** *(2006.01)* **B60D 1/62** *(2006.01)*

(52) Gemeinsame Patentklassifikation (CPC):
**B60D 1/54; B60D 1/06; B60D 1/52; B60D 1/62**

(54) **Anhängekupplung mit einer Auswerteeinrichtung**

Draw bar with an evaluation device

Attelage doté d'un dispositif d'évaluation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2013 DE 102013007726**

(43) Veröffentlichungstag der Anmeldung:
**12.11.2014 Patentblatt 2014/46**

(73) Patentinhaber: **WESTFALIA - Automotive GmbH 33378 Rheda-Wiedenbrück (DE)**

(72) Erfinder: **Sielhorst, Bernahrd 33378 Rheda-Wiedenbrück (DE)**

(74) Vertreter: **Patentanwälte Bregenzer und Reule Partnerschaftsgesellschaft mbB Neckarstraße 47 73728 Esslingen (DE)**

(56) Entgegenhaltungen:
| | |
|---|---|
| EP-A1- 2 316 669 | EP-A1- 2 452 839 |
| EP-A1- 2 554 406 | EP-A1- 2 602 133 |
| EP-A2- 1 160 105 | DE-A1-102004 044 295 |
| DE-U1-202011 103 345 | DE-U1-202011 103 345 |

EP 2 801 487 B2

**Beschreibung**

Die Erfindung betrifft eine Anhängekupplung für ein Kraftfahrzeug, mit einem Kupplungsarm, gemäß dem Oberbegriff des Anspruchs 1. Die Erfindung betrifft ferner ein Auswertemodul zur Auswertung eines Betriebszustandsignals einer Anhängekupplung.

Eine derartige Anhängekupplung ist beispielsweise in DE 20 2011 103 345 U1 erläutert.

Eine weitere Anhängekupplung ist beispielsweise in DE 10 2012 021 352 erläutert. Eine Ausführungsform dieser Anhängekupplung sieht ein Schwenklager vor, das ein Schwenken der Anhängekupplung zwischen einer Gebrauchsstellung und einer Nichtgebrauchsstellung ermöglicht. An dem Kupplungsarm ist ein Lastsensor angeordnet, mit dem beispielsweise eine Stützlast und/oder eine Zuglast, die am Kupplungsarm angreift, ermittelbar ist.

Es hat sich in der Praxis als problematisch herausgestellt, beispielsweise einen Ausgangszustand der Anhängekupplung im unbelasteten Zustand, d.h. wenn noch kein Objekt, insbesondere kein Lastenträger oder Anhänger, an dem Kupplungsarm angreift, zu ermitteln.

Es ist daher die Aufgabe der vorliegenden Erfindung, eine Anhängekupplung mit einem verbesserten System zur Erfassung eines Betriebszustandes, der von einer Nutzung des Kupplungsarms durch den Anhänger oder Lastenträger abhängt, bereitzustellen.

Zur Lösung der Aufgabe sind eine Anhängekupplung gemäß der technischen Lehre des Anspruchs 1 und ein Auswertemodul gemäß der technischen Lehre des Anspruchs 13 vorgesehen.

Am Kupplungsarm ist z.B. ein Kuppelkörper oder ein Kuppelelement, z.B. Kupplungskugel, zum Ankuppeln des Anhängers oder des Lastenträgers angeordnet.

Es ist ein Grundgedanke, dass die Erfassung der Gebrauchsstellung, die auch indirekt durch die Erfassung der Nichtgebrauchsstellung des Kupplungsarms geschehen kann, sozusagen die Basis für die Auswertung des mindestens einen Betriebszustandsignals schafft. Man könnte das Gebrauchsstellungssignal auch beispielsweise als Nichtgebrauchsstellungssignal bezeichnen, wenn es sozusagen die negative Gebrauchsstellung, nämlich die Nichtgebrauchsstellung, betrifft oder repräsentiert. Das von der Gebrauchsstellung abhängige Gebrauchsstellungssignal hängt also quasi indirekt auch von der Nichtgebrauchsstellung ab.

Wenn der Kupplungsarm die Nichtgebrauchsstellung einnimmt, können Messungen und Auswertungen stattfinden, die in der Nichtgebrauchsstellung zweckmäßig sind, während wenn der Kupplungsarm die Gebrauchsstellung einnimmt andere Messungen vorteilhaft sind, beispielsweise eine Stützlastmessung, eine Zuglastmessung, eine Anhänger-Massenbestimmung oder dergleichen. Das System eignet sich auch zur Diagnose bzw. Selbstdiagnose, d.h. in der Nichtgebrauchsstellung des Kupplungsarms können vorteilhaft Diagnosen oder Selbsttests stattfinden, die in der Gebrauchsstellung nicht sinnvoll sind oder nur mit größerem Aufwand betrieben werden können.

Zweckmäßigerweise ist beispielsweise vorgesehen, dass die Auswerteeinrichtung zur Ermittlung mindestens eines Ausgangswert des mindestens einen Betriebszustandsignals, das den Betriebszustandes Kupplungsarms in einem nicht durch den Lastenträger oder Anhänger genutzten Zustand repräsentiert, in Abhängigkeit von dem Gebrauchsstellungssignal ausgestaltet ist. Es so zum Beispiel möglich, dass in der Nichtgebrauchsstellung der Ausgangswert, z.B. ein Basiswert oder Nullwert, des mindestens einen Betriebszustandsignals ermittelt wird, das dann die Basis für die spätere Ermittlung des Betriebszustandes des Kupplungsarms in der Gebrauchsstellung bildet. Es ist aber auch umgekehrt möglich, dass der mindestens eine Ausgangswert in der Gebrauchsstellung ermittelt wird und später dann in der Nichtgebrauchsstellung verifiziert wird.

Selbstverständlich können bei der erfindungsgemäßen Anhängekupplung mehrere Betriebszustände erfasst werden, beispielsweise Stützlast, Zuglast, eine Winkelstellung des Anhängers relativ zum Zugfahrzeug, Temperaturen oder dergleichen. Für einen oder mehrere dieser Betriebszustände kann jeweils ein Ausgangswert auf diese Weise ermittelt werden. Mithin können also auch mehrere Ausgangswerte abhängig von der Gebrauchsstellung oder der Nichtgebrauchsstellung ermittelt werden.

Eine vorteilhafte Ausführungsform der Erfindung sieht vor, dass die Auswerteeinrichtung zur Ermittlung des mindestens einen Ausgangswerts ausgestaltet ist, während der Kupplungsarm in der Nichtgebrauchsstellung ist. Wenn also zuverlässig feststeht, dass der Kupplungsarm seine Nichtgebrauchsstellung einnimmt, kann beispielsweise eine Initialisierung des Systems stattfinden, zum Beispiel eine Temperaturmessung, eine Tara-Bildung oder dergleichen.

Vorteilhaft ist vorgesehen, dass die Auswerteeinrichtung oder das Auswertemodul den mindestens einen Ausgangswert in Abhängigkeit von einem Zustandswechsel des mindestens einen Betriebszustandsignals von der Gebrauchsstellung in die Nichtgebrauchsstellung und/oder umgekehrt von der Nichtgebrauchsstellung in die Gebrauchsstellung ausgestaltet ist. Wenn also der Kupplungsarm beispielsweise zunächst in der Nichtgebrauchsstellung ist, dann jedoch in die Gebrauchsstellung verstellt wird, beginnt die Auswerteeinrichtung mit der Ermittlung des mindestens einen Ausgangswerts. Aber auch der umgekehrte Fall ist vorteilhaft, dass die Auswerteeinrichtung/das Auswertemodul nämlich beispielsweise unmittelbar nach Verlassen der Gebrauchsstellung das mindestens eine Betriebszustandsignal auswertet.

Die Auswerteeinrichtung ist vorteilhaft dazu ausgestaltet, den mindestens einen Ausgangswert in einem vordefinierten Zeitfenster unmittelbar nach einem Übergang von der Nichtgebrauchsstellung in die Gebrauchsstellung des Kupplungsarms durchzuführen, also direkt nach einem derartigen Zustandswechsel des mindestens einen Gebrauchsstellungssignals. Wenn also der Kupplungsarm von der Nichtgebrauchsstellung in die Gebrauchsstellung verstellt wird, ist er in der Regel noch unbelastet durch beispielsweise den Lastenträger oder den Anhänger. Dann ist eine Start-Messung, d.h. Ermittlung des Ausgangswerts oder der Ausgangswerte besonders vorteilhaft.

Eine vorteilhafte Ausführungsform sieht vor, dass die Auswerteeinrichtung oder das Auswertemodul das Zeitfenster schließt und die Ermittlung des mindestens einen Ausgangswerts in Abhängigkeit von einem Zustandswechsel des mindestens ein Betriebszustandsignals beendet. Wenn also beispielsweise das Betriebszustandsignal signalisiert, dass eine größere Stützlast als unmittelbar nach dem Zustandswechsel von der Nichtgebrauchsstellung in die Gebrauchsstellung an dem Kupplungsarm angreift, wird die Ermittlung des mindestens einen Ausgangswerts abgeschlossen. Auch wenn beispielsweise ein Winkelsignal erzeugt wird, weil nämlich beispielsweise ein Winkelsensor durch den Anhänger oder einen Lastenträger betätigt wird, ist es vorteilhaft, wenn die Initialisierungsphase abgeschlossen wird, d.h. der mindestens eine Ausgangswert nicht weiter ermittelt wird.

Es kann auch vorgesehen sein, dass die Auswerteeinrichtung oder das Auswertemodul die Ermittlung des mindestens einen Ausgangswerts abschließt, wenn dieser einen stabilen Zustand erreicht hat.

Das mindestens eine Gebrauchsstellungssignal kann auf vielfältige Weise erzeugt werden. Mit anderen Worten kann die Auswerteeinrichtung oder kann das Auswertemodul eines oder mehrere unterschiedliche Gebrauchsstellungssignale auswerten.

Eine Redundanz bei der Auswertung der Gebrauchsstellungssignale ist vorteilhaft, so dass auf diesem Wege sichergestellt werden kann, dass der Kupplungsarm tatsächlich die Gebrauchsstellung oder die Nichtgebrauchsstellung einnimmt.

Beispielsweise kann das Gebrauchsstellungssignal ein Verriegelungssignal umfassen, das eine Verriegelung des Kupplungsarms in der Gebrauchsstellung oder der Nichtgebrauchsstellung oder beiden Stellungen signalisiert. Wenn also beispielsweise ein Riegel oder ein Formschlusselement, in eine Verriegelungsaufnahme oder Formschlussaufnahme eingreift und somit der Kupplungsarm in der Gebrauchsstellung oder der Nichtgebrauchsstellung festgelegt ist, kann der Verriegelungssensor diese Verriegelungsstellung erfassen und das entsprechende Gebrauchsstellungssignal, nämlich das Verriegelungssignal, erzeugen. Wenn also der Kupplungsarm in der Gebrauchsstellung verriegelt ist, ist er in der Gebrauchsstellung.

Das mindestens ein Gebrauchsstellungssignal kann aber auch ein Antriebssignal umfassen, das von einem manuellen oder motorischen Antrieb zur Verstellung des Kupplungsarms zwischen der Nichtgebrauchsstellung in der Gebrauchsstellung stammt. Das Antriebssignal kann aber auch von einer diesen Antrieb ansteuernden Steuerungseinrichtung erzeugt werden. Das Auswertemodul/die Auswerteeinrichtung kann die Steuerungseinrichtung umfassen oder von dieser gebildet sein. Das Antriebsignal hängt beispielsweise von einer jeweiligen Stellung des Kupplungsarms ab, d.h. es signalisiert beispielsweise, dass der Kupplungsarm in der Gebrauchsstellung und/oder der Nichtgebrauchsstellung und/oder einer zwischen der Gebrauchsstellung und der Nichtgebrauchsstellung liegenden Stellung ist. Die Steuerungseinrichtung überwacht beispielsweise einen Strom zur Ansteuerung eines Antriebsmotors zum Antreiben des Kupplungsarms zwischen der Gebrauchsstellung und der Nichtgebrauchsstellung. An dieser Stelle sei bemerkt, dass der Antrieb auch unidirektional sein kann, d.h. dass der Kupplungsarm beispielsweise motorisch von der Nichtgebrauchsstellung in die Gebrauchsstellung verstellt wird, während eine Federanordnung für die Rückstellung von der Gebrauchsstellung in die Nichtgebrauchsstellung sorgt.

Eine erfindungsgemäße Variante sieht vor, dass die Anhängekupplung mindestens einen Lagesensor zur Erfassung einer Lage des Kupplungsarms aufweist, wobei der Lagesensor zur Erzeugung des mindestens einen Gebrauchsstellungssignals oder eines Gebrauchsstellungssignals ausgestaltet ist. Der Lagesensor ist beispielsweise direkt am Kupplungsarm angeordnet. Es ist aber auch möglich, dass der Lagesensor an einem von dem Kupplungsarm betätigten Element, zum Beispiel einer Anhängersteckdose, angeordnet ist.

Der mindestens eine Lagesensor umfasst zweckmäßigerweise einen Beschleunigungssensor, der zur Erfassung mindestens einer von einer Beschleunigung abhängigen Kraftkomponente ausgestaltet ist.

Vorzugsweise arbeitet der Lagesensor dreidimensional, d.h. in X-Richtung, in Y-Richtung und in Z-Richtung.

Der Lagesensor es jedenfalls vorteilhaft zur Erfassung einer in Fahrzeuglängsrichtung des Kraftfahrzeugs wirkenden Beschleunigung ausgestaltet.

Die Auswerteeinrichtung ist zweckmäßigerweise zur Erzeugung eines die Masse des Anhängers repräsentierenden Schub- oder Zuglastsignals ausgestaltet, insbesondere anhand der in Fahrzeuglängsrichtung des Kraftfahrzeugs wirkenden Beschleunigung bzw. eines ist die Beschleunigung repräsentierenden Beschleunigungswerts. Der Beschleunigungswert wird zweckmäßigerweise von einem Beschleunigungssensor oder Lagesensor erzeugt, der vorteilhaft einen Bestandteil der Auswerteeinrichtung, jedenfalls der Anhängekupplung gemäß der Erfindung bildet. Der Beschleunigungswert oder Werte zur Ermittlung desselben, z.B. Geschwindigkeitswerte oder Drehzahlwerte, können von der Auswerteeinrichtung auch über ein Bordnetz des Zugfahrzeugs empfangen werden, z.B. über einen Datenbus.

Der mindestens eine Betriebszustandsensor umfasst zweckmäßigerweise einen Beschleunigungssensor, der zur Erfassung mindestens einer von der Quer-Beschleunigung und/oder von einer Längs-Beschleunigung des Kraftfahrzeugs abhängigen Beschleunigungskomponente oder Kraftkomponente ausgestaltet ist.

Die Kraftkomponente ist vorzugsweise eine in Fahrzeuglängsrichtung wirkenden Kraftkomponente.

Der Beschleunigungssensor kann gleichzeitig auch die Funktion eines Lagesensors darstellen. Der Lagesensor kann den Beschleunigungssensor bilden.

Der mindestens eine Betriebszustandsensor umfasst zweckmäßigerweise mit mindestens einen Kraftsensor zur Erfassung einer bei einem Zugbetrieb des Anhängers auf den Kupplungsarm wirkenden Zugkraft und/oder Schubkraft und zur Ausgabe eines die Zugkraft und/oder Schubkraft repräsentierenden Kraftsignals also des oder eines Betriebszustandsignals.

Der mindestens eine Betriebszustandsensor, zum Beispiel ein Lastsensor, ist zweckmäßigerweise zur Erfassung einer in Fahrzeuglängsrichtung des Kraftfahrzeugs abhängigen Kraftkomponente und die Auswerteeinrichtung weiter vorteilhaft zur Erzeugung eines die Masse des Anhängers repräsentierenden Zuglastsignals ausgestaltet. Mithin kann also der Betriebszustandsensor sozusagen die Zuglast oder Schublast messen. Eine bevorzugte Weiterbildung der Erfindung sieht dann vor, dass eine Beschleunigung in Fahrzeuglängsrichtung gemessen wird.

Der mindestens eine Betriebszustandsensor umfasst zweckmäßigerweise einen Winkelsensor zur Erfassung einer Winkelstellung des Anhängers oder des Lastenträgers relativ zu dem Kupplungsarm. Der Winkelsensor umfasst beispielsweise einen Sensorgeber, der durch eine Drehbewegung des Anhängers relativ zum Zugfahrzeug oder Kupplungsarm betätigbar ist und den Drehwinkelsensor, beispielsweise einen magnetischen Sensor, betätigt, so dass dieser das Winkelsignal erzeugen kann, das die Winkelstellung des Anhängers relativ zum Kupplungsarm repräsentiert.

Es ist auch möglich, dass der Winkelsensor oder die Anordnung mehrerer Winkelsensoren optische Sensoren und/oder induktive Sensoren umfassen oder dadurch gebildet sind. Der Sensor oder die Sensoren erfassen eine Winkelstellung des Anhängers relativ zum Zugfahrzeug zweckmäßigerweise berührungslos. Der mindestens eine Winkelsensor wird z.B. ohne einen beweglich an der Anhängekupplung gelagerten, z.B. durch die Kupplungsvorrichtung des Anhängers, betätigbaren Sensorgeber. Für den oder die Sensoren ist also beispielsweise kein insbesondere drehbar am Kuppelelement, insbesondere der Kupplungskugel, gelagerter Sensorgeber notwendig. Der mindestens eine Sensor wird beispielsweise durch die Kupplung oder Kupplungsvorrichtung des Anhängers oder Lastenträgers, zum Beispiel eine Zugkugelkupplung, betätigt oder erregt.

Es ist möglich, dass ein induktiver Sensor oder die erfindungsgemäße Anhängekupplung an einer anderen Stelle abseits des Sensors beispielsweise schon einen Erzeuger für ein magnetisches Feld, z.B. einen Permamentmagneten, an Bord hat. Das Feld wird beispielsweise durch die Kupplung des Anhängers verändert, wenn sich die Winkelstellung des Anhängers relativ zum Zugfahrzeug ändert. Ein solcher berührungslos, beispielsweise optisch oder induktiv oder beides arbeitender Sensor kann beispielsweise eine Winkelstellung einer Kugelkupplungaufnahme relativ zum Kugelkopf der Anhängekupplung und somit eine Winkelstellung des Anhängers relativ zum Zugfahrzeug erfassen. Bei der zu erfassenden Winkelstellung kann es sich vorzugsweise um eine Winkellage bezüglich einer vertikalen Achse oder Z-Achse oder einer Hochachse handeln, aber auch um Winkelstellungen quer dazu.

Der Betriebszustandsensor kann aber auch einen Lastsensor, zum Beispiel eine Stützlastsensor und/oder Zuglastsensor, zur Erfassung einer Belastung des Kupplungsarms durch den Anhänger oder den Lastenträger umfassen.

Weiterhin vorteilhaft ist ein Objektsensor, zum Beispiel ein optischer und/oder induktiver Sensor, zur Erfassung eines einem Kupplungsarm, zum Beispiel einem Kuppelelement zum Ankuppeln des Anhängers oder des Lastenträgers, angreifenden Objekts umfasst. Das Objekt ist beispielsweise eine Zugkugelkupplung oder eine Klemmhalterung, die an der Kupplungskugel oder einem sonstigen Kuppelelement der Anhängekupplung angreift.

Bevorzugt umfasst der mindestens ein Betriebszustandsensor, wie erwähnt, einen Beschleunigungssensor, der zur Erfassung einer Beschleunigung des Kraftfahrzeugs in Fahrzeuglängsrichtung ausgestaltet ist.

In Kombination mit dem Zuglastsignal ist hierbei eine Anhängermasse ermittelbar. Das funktioniert bei der Auswerteeinrichtung oder dem Auswertemodul beispielsweise wie folgt:

In vertikaler Richtung, d.h. in Z-Richtung wirkt die Stützlast Fz auf die Anhängekupplung:

$$F_Z = st * g \qquad (1)$$

In der Formel (1) sind g die Erdbeschleunigung und st die auf den Kupplungsarm, zum Beispiel die Kupplungskugel oder ein sonstiges Kuppelelement, wirkende Stützmasse.

Eine in x-Richtung bzw. horizontal in Fahrzeuglängsrichtung an der Anhängekupplung angreifende Zuglast Fx kann mit der nachfolgenden Formel (2) zusammengefasst werden:

$$F_x = F_T + F_L + F_R + F_{rot} \qquad (2)$$

Die einzelnen Faktoren der Zuglast Fx sind dabei die Trägheitskraft FT, die Luftwiderstandskraft FL, eine die Rollreibung verursachte Kraft FR und eine Kraft Frot, in der die durch die Trägheit von Reifen und anderen rotatorischen Massen bedingten Kräfte zusammengefasst sind.

Bei geringen Geschwindigkeiten kann die Luftwiderstandskraft FL vernachlässigt werden. Es ist daher vorteilhaft, die erfindungsgemäße Ermittlung einer Anhängermasse bei relativ niedrigen Geschwindigkeiten durchzuführen, bei denen der Luftwiderstand noch gering ist. Selbstverständlich ist es auch denkbar, dass beispielsweise der Einfluss des Luftwiderstands von der Auswerteeinrichtung geschwindigkeitsabhängig ermittelt wird, um den jeweiligen Einfluss auf das Gesamt-Resultat der Zuglast Fx zu eliminieren.

Wenn jedoch die Luftwiderstandskraft eliminiert wird, kann die obige Formel (2) wie folgt vereinfacht werden:

$$F_x = F_T + F_R + F_{rot} \qquad\qquad (3)$$

Die durch die Rollreibung verursachte, an der Anhängekupplung angreifende Kraft FR wird durch die Masse m des Anhängers beeinflusst, wobei jedoch ein Teil dieser Masse von der Anhängekupplung abgestützt wird, d.h. so dass diese Stützlast oder Stützmasse keinen Einfluss auf die Rollreibung hat. Die Stützmasse st ist also bei der folgenden Formel (4) von dem Massewert m subtrahiert:

$$F_R = (m - st) * g * \mu \qquad\qquad (4)$$

In der Formel (4) sind g die Erdbeschleunigung und $\mu$ ein Rollwiderstandskoeffizient. Der Rollwiderstandkoeffizient kann als ein konstanter Wert, z.B. Mittelwert, angesehen werden, der bei einer üblichen Bereifung bzw. bei durchschnittlichen Fahrbahnbelägen vorhanden ist.

Die Trägheitskraft FT wird im Wesentlichen durch die Anhängermasse m und die Beschleunigung ax in X-Richtung bestimmt:

$$FT = m * ax \qquad\qquad (5)$$

Wenn die Formeln (4) und (5) in die Formel (3) eingesetzt werden, ergibt sich folgendes:

$$F_x - F_{rot} = m * a_x + (m - st) * g * \mu \qquad\qquad (6)$$

Wenn dann noch die Formel (1) berücksichtigt wird, kann man folgende Formel entwickeln:

$$F_x - F_{rot} + F_z * \mu = m * (a_x + g * \mu) \qquad\qquad (7)$$

Durch Umformung der Formel (7) kann die Masse des Anhängers wie folgt bestimmt werden:

$$m = \frac{F_x - F_{rot} + F_z * \mu}{(a_x + g * \mu)} \qquad\qquad (8)$$

Unter Berücksichtigung der Überlegung, dass die Rotationsbeschleunigung nur geringe Kräfte verursacht, d. h. dass das Verhältnis der Kraft Frot zur Gesamt-Kraft Fx in Horizontalrichtung wie folgt lautet

$$\frac{F_{rot}}{F_x} * 100 = 2\% \; bis \; 3\%$$

kann in der obigen Formel (8) der Anteil der Kraft Frot vernachlässigt werden. Die Masse des Anhängers lässt sich also durch die beiden Kräfte Fx und Fz sowie den Beschleunigungswert in X-Richtung bzw. Fahrzeug-Längsrichtung ax ermitteln.

Eine vorteilhafte Variante der Erfindung sieht dabei vor, dass mit einem einzigen Kraftsensor beide Kräfte Fx und Fz ermittelt werden. Dabei ist die Auswerteeinrichtung zweckmäßigerweise so ausgestaltet, dass sie zunächst im Stand die durch die Stützlast verursachten Kräfte, d.h. die Kräfte in z-Richtung, nämlich die Kraft Fz, ermittelt und bei der anschließenden Beschleunigung des Gespanns die in X-Richtung wirkende Kraft Fx. In diesem Zusammenhang ist es vorteilhaft, wenn die Auswerteeinrichtung einen Beschleunigungswert und/oder einen Geschwindigkeitswert auswertet, um sozusagen zwischen den einzelnen Kraftermittlungen umzuschalten.

So ist es beispielsweise vorteilhaft, dass zunächst die in vertikaler Richtung wirkende Kraft Fz ermittelt wird und die Auswerteeinrichtung den dabei ermittelten Wert in die obige Formel (8) sowie den anschließend bei der Beschleunigung des Gespanns ermittelten Wert der Kraft Fx zur Ermittlung der Masse des Anhängers anhand beispielsweise der Formel (8) auswertet.

Die Auswerteeinrichtung ermittelt also beispielsweise während oder nach einem Wechsel des Kupplungsarms von der Nichtgebrauchsstellung in die Gebrauchsstellung unmittelbar zunächst einen Ausgangswert, sozusagen einen Startwert, für die Stützlast und/oder die Zuglast, die am Kupplungsarm angreift. Wird dann der Anhänger oder Lastenträger einen Kupplungsarm angekuppelt, ermittelt die Auswerteeinrichtung dann die Stützlast. Wenn das Gespann bestehend aus Zugfahrzeug und Anhänger oder Lastenträger fährt, ermittelt die Auswerteeinrichtung oder das Auswertemodul die Masse des Anhängers oder des Lastenträgers.

Die Anhängekupplung, insbesondere die Auswerteeinrichtung oder das Auswertemodul, weist beispielsweise eine Anzeigeeinrichtung zur Anzeige mindestens eines Betriebszustandes, beispielsweise der ermittelten Werte von Stützlast und/oder Zuglast und/oder Anhänger-Massewert, auf.

Die Auswerteeinrichtung umfasst zweckmäßigerweise auch eine Datenschnittstelle zur Ausgabe von Daten an ein Bordnetz des Zugfahrzeugs, insbesondere eine Busschnittstelle zur Ankopplung an einen Datenbus des Zugfahrzeugs, zum Beispiel einen CAN-Bus, LIN-Bus oder dergleichen.

Die Auswerteeinrichtung oder das Auswertemodul sind in einer Variante der Erfindung zu einer Diagnose des mindestens einen Betriebszustandsensors ausgestaltet. Auch elektronische Komponenten der Auswerteeinrichtung können von der Auswerteeinrichtung selbst getestet werden. Wenn sich der Kupplungsarm in der Nichtgebrauchsstellung befindet, ist es beispielsweise vorteilhaft, die Elektronik immer wieder zu überprüfen, so dass sie betriebsbereit ist, wenn später das Betriebszustandsignal auszuwerten ist. In einer weiteren Variante der Erfindung findet eine mechanische Überprüfung statt, das heißt dass beispielsweise bei einem mechanisch einwandfreien Kupplungsarm oder einer mechanisch einwandfreien Trägeranordnung zum Halten der Anhängekupplung ein Ausgangssignal einen vordefinierten Wert hat. Wenn jedoch der Kupplungsarm und/oder die Trägeranordnung beschädigt ist, beispielsweise verbogen, stellt die Auswerteeinrichtung oder das Auswertemodul fest, dass die mechanische Komponente nicht in Ordnung ist. Das kann zu einer Fehlermeldung führen, die vorzugsweise an das Bordnetz des Kraftfahrzeugs gemeldet wird und/oder an einer Anzeigeeinrichtung angezeigt wird.

Das erfindungsgemäße Verfahren ist anhand einer Software realisiert, wobei ein Prozessor der Auswerteeinrichtung anhand der Software in der Lage ist, die erfindungsgemäßen Verfahrensschritte auszuführen. Ein anderer Aspekt der Erfindung kann vorsehen, dass die Auswerteeinrichtung ein Steuergerät des Zugfahrzeugs ist, das anhand der vorgenannten Software in der Lage ist, das erfindungsgemäße Verfahren durchzuführen.

Der Halter kann ein Halter sein oder umfassen, an dem der Kupplungsarm lösbar befestigbar ist, insbesondere mittels einer Steckverbindung. Es ist aber auch eine bewegliche Lagerung möglich, bei der der Kupplungsarm beispielsweise schwenkbar und/oder schiebebeweglich an dem Halter gelagert ist. Der Halter umfasst also in diesem Fall ein Schwenklager und/oder ein Schiebelager. Eine Ausführungsform kann vorsehen, dass der Kupplungsarm dauerhaft an dem Halter verbleibt, somit auch im am Kraftfahrzeug montierten Zustand dem Halter dauerhaft am Kraftfahrzeug.

Bei einem Stecksystem oder einem sonstigen Befestigungssystem, bei dem der Kupplungsarm lösbar an dem Halter befestigt ist, kann die erfindungsgemäße Vorgehensweise ebenfalls vorteilhaft sein, indem nämlich beispielsweise bei nicht an dem Halter befestigtem Kupplungsarm (Nichtgebrauchsstellung) beispielsweise von einem an einer Trägeranordnung angeordneten Betriebszustandsensor stammende Betriebszustandsignale von der Auswerteeinrichtung bzw. dem Auswertemodul ausgewertet werden. Die Trägeranordnung dient beispielsweise dazu, den Halter zu tragen und ist am Kraftfahrzeug befestigt oder befestigbar.

Die Trägeranordnung umfasst beispielsweise einen hinten am Heck des Kraftfahrzeugs in Fahrzeugquerrichtung verlaufenden Querträger, an dem der Halter befestigt ist. Die Trägeranordnung kann auch Seitenträger umfassen, die vom Querträger abstehen und beispielsweise seitlich an der Karosserie des Kraftfahrzeugs befestigt sind oder auch beispielsweise an den Längsträgern des Kraftfahrzeugs befestigt oder befestigbar sind.

Nachfolgend werden Ausführungsbeispiele der Erfindung anhand der Zeichnung erläutert. Es zeigen:

Figur 1    eine perspektivische Schrägansicht einer Anhängekupplung, deren Kupplungsarm in einer Gebrauchsstellung ist,

Figur 2    den Kupplungsarm in der Nichtgebrauchsstellung,

Figur 3    eine perspektivische Schrägansicht des Kupplungsarms der Anhängekupplung gemäß Figur 1 von oben, ,

Figur 4    eine Ansicht von schräg unten auf den Kupplungsarm gemäß Figur 1, 2,

Figur 5    ein Ablaufdiagramm des Verfahrens gemäß der Erfindung

Figur 6    ein Blockschaltbild einer Auswerteeinrichtung der Anhängekupplung gemäß Figuren 1-3

Figur 7    ein alternatives Kuppelelement für die Anhängekupplung gemäß Figuren 1-3 mit einem Winkelsensor und einer Anordnung von mehreren Objektsensoren.

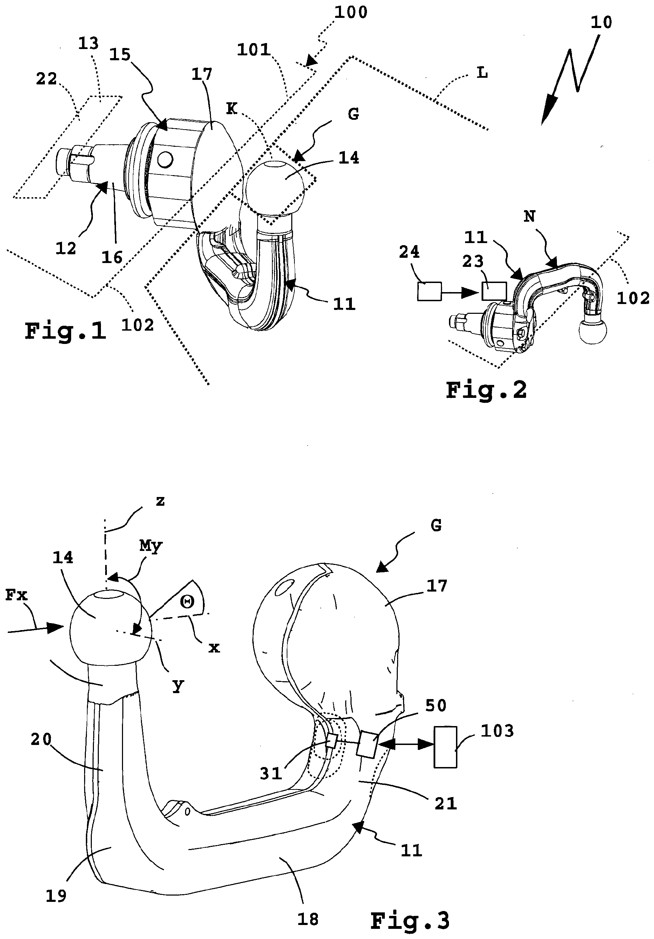

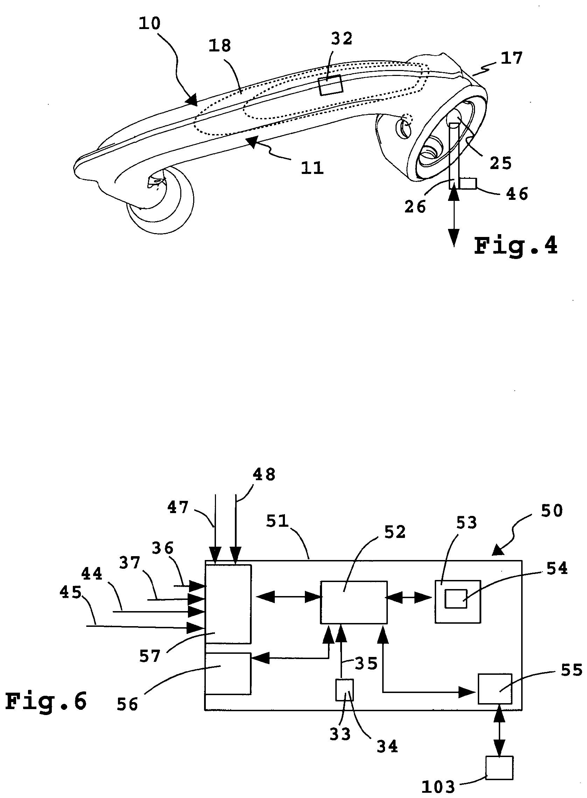

Eine Anhängekupplung 10 gemäß Figuren 1-6 umfasst einen Kupplungsarm 11, der an einem Halter 12 beweglich zwischen einer in Figur 1 dargestellten Gebrauchsstellung G und einer in Figur 2 dargestellten Nichtgebrauchsstellung N gelagert ist. Der Halter 12 umfasst beispielsweise ein Lager 15, z.B. ein Schwenklager, ein Schiebelager oder eine Kombination davon (Schwenk-Schiebelager).

Der Halter 12 ist an einem Querträger 13 einer Trägeranordnung 22 befestigt, der seinerseits wiederum am Heck 101 eines Kraftfahrzeugs 100 befestigt ist. Vom Querträger 13 können Seitenträger abstehen, die beispielsweise seitlich an einer Karosserie (nicht dargestellt) oder an Längsträgern des Kraftfahrzeugs 100 befestigt sind. In der Gebrauchsstellung G steht der Kupplungsarm 11 nach hinten vor einen Stoßfänger 102 des Kraftfahrzeugs 100 vor, so dass er zum Gebrauch bereitsteht, beispielsweise zur Befestigung eines Lastenträgers L. In der Nichtgebrauchsstellung N hingegen ist der Kupplungsarm 11 nicht zum Ankuppeln eines Anhängers oder Lastenträgers bereit, beispielsweise ganz oder im Wesentlichen hinter den Stoßfänger 102 verborgen.

Das Kraftfahrzeug 100 ist beispielsweise ein Personenkraftwagen mit einem Verbrennungsmotor und/oder einem Elektromotor. Das erfindungsgemäße Prinzip ist aber selbstverständlich auch bei Nutzfahrzeugen, deren Anhängekupplung zwischen einer Gebrauchsstellung und einer Nichtgebrauchsstellung verstellbar ist, jederzeit anwendbar.

Der Lastenträger L umfasst beispielsweise eine Klemmvorrichtung oder Kupplungsvorrichtung K zum Ankuppeln an ein Kuppelelement 14, zum Beispiel eine Kupplungskugel, der Anhängekupplung 10.

Das Lager 15 umfasst eine am Querträger 13 befestigte Lagerbasis 16, an der ein Lagerelement 17 beweglich gelagert ist. Vom Lagerelement 17 steht ein Armabschnitt 18 des Kupplungsarms 11 beispielsweise anhand eines Krümmungsabschnitts 21 oder dergleichen ab. Vom Armabschnitt 18 erstreckt sich ein Krümmungsabschnitt 19 nach oben, wobei oben am Krümmungsabschnitt 19 wiederum ein Armabschnitt 20 angeordnet ist, an dem das Kuppelelement 14, zum Beispiel die Kupplungskugel, befestigt ist.

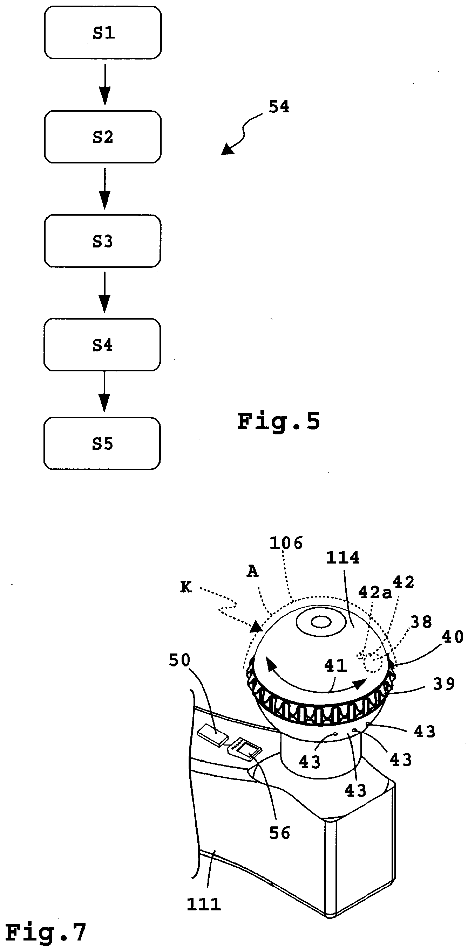

Diese Krümmungen des Kupplungsarms sind aber nicht unbedingt notwendig, was im Ausführungsbeispiel gemäß Figur 7 deutlich wird, d.h. dass beispielsweise auch winkelige oder nicht winkelige Verläufe oder nicht gekrümmte Verläufe eines Kupplungsarms ohne weiteres möglich sind.

Am Krümmungsabschnitt 21 ist ein Betriebszustandsensor 31 angeordnet, beispielsweise ein Kraftsensor, der an dem Krümmungsabschnitt 21 angreifende Kräfte, beispielsweise Biegekräfte, Torsionskräfte oder dergleichen misst, wenn das Kuppelelement 14 durch beispielsweise den Lastenträger L belastet ist. Ein weiterer Betriebszustandsensor 32 ist beispielsweise unten am Armabschnitt 18 angeordnet.

In gestrichelten Linien ist im Bereich der beiden Betriebszustandsensoren 31 und 32 jeweils ein Kraftverlauf eingezeichnet, der durch die Belastung des Kupplungsarms 11 durch Stützlast oder Zuglast auftreten kann. Die beiden Kraftsensoren oder Betriebszustandsensoren 31, 32 messen beispielsweise Kraftkomponenten einer Stützlast, die in Z-Richtung auf das Kuppelelement 14 wirkt und/oder Kraftkomponenten einer in Fahrzeuglängsrichtung wirkenden Zuglast Fx.

Bei den Betriebszustandsensoren 31, 32 handelt es sich beispielsweise um Dehnungsmessstreifen. Aber auch induktiv oder kapazitiv eine jeweilige Belastung des Kupplungsarms 11 messende Betriebszustandsensoren oder Kraftmessungssensoren sind ohne weiteres möglich.

Die Betriebszustandsensors 31, 32 erzeugen beispielsweise Betriebszustandsignale 36, 37, nämlich Kraftsignale, die eine Belastung bzw. eine Zustandsänderung der Dehnungsmessstreifen oder Betriebszustandsensoren 31, 32 signalisieren.

An dem Kupplungsarm 11 ist weiterhin ein Beschleunigungssensor 33 angeordnet, der zur Messung von in X-Richtung, Y-Richtung und Z-Richtung wirkenden Kraftkomponenten und/oder Beschleunigungen ausgestaltet ist. Der Beschleunigungssensor 33 kann beispielsweise die in Fahrzeuglängsrichtung wirkende Beschleunigung ax messen und als ein Betriebszustandsignal 49 an eine Auswerteeinrichtung 50 melden.

Der Beschleunigungssensor 33 umfasst oder bildet zugleich einen Lagesensor 34, der die Lage des Kupplungsarms 11 erfassen kann, wobei der Lagesensor 34 ein Gebrauchsstellungssignal 35 erzeugt, das beispielsweise in der Gebrauchsstellung G einen Gebrauchsstellungswert und in der Nichtgebrauchsstellung N einen Nichtgebrauchsstellungswert umfasst.

Die Auswerteeinrichtung 50 umfasst beispielsweise ein Gehäuse 51, in welchem ein Prozessor 52 sowie einen Speicher 53 angeordnet ist. In dem Speicher 53 ist ein Auswertemodul 54 gespeichert, dessen Programmcode vom Prozessor 52 ausführbar ist. Der Beschleunigungssensor 33 befindet sich z.B. an Bord der Auswerteeinrichtung 50. Es ist auch möglich, dass eine Beschleunigungssensor in der Art des Beschleunigungssensors 33 beispielsweise direkt am Kupplungsarm 11 angeordnet ist.

Eine bevorzugte Ausführungsform der Erfindung sieht nämlich vor, dass die Auswerteeinrichtung 50 direkt am Kupplungsarm 11 angeordnet ist, beispielsweise in der Art wie in Figur 7 dargestellt. Somit ist auch beispielsweise eine Anzeigeeinrichtung 56 gut sichtbar, mit der die Auswerteeinrichtung 50 von den Betriebszustandsignalen 36, 37 abhängige Betriebszustände, beispielsweise eine Stützlast, eine Zuglast oder dergleichen anzeigen kann. Die Auswerteeinrichtung 50 ist nämlich beispielsweise anhand der eingangs genannten Formeln (1) - (8) in der Lage, eine Masse eines Anhängers oder des Lastenträgers L zu ermitteln, insbesondere unter Berücksichtigung der Signale des Beschleunigungssensors 33.

Es ist selbstverständlich auch möglich, dass die Auswerteeinrichtung 50 an Bord des Kraftfahrzeugs 100 ist und beispielsweise über Funk, über Leitungen oder dergleichen mit beispielsweise dem Betriebszustandsensor und 31, 32 sowie dem Lagesensor 34, also dem Gebrauchsstellungssensor, kommuniziert.

Weiterhin hat die Auswerteeinrichtung 50 eine Datenschnittstelle 55 zur Kommunikation mit einem Bordnetz 103 des Kraftfahrzeugs 100. Die Datenschnittstelle 55 umfasst beispielsweise eine Funk-Schnittstelle oder auch eine leitungsgebundene Schnittstelle. Bevorzugt umfasst die Datenschnittstelle eine Bus-Schnittstelle zur Kommunikation mit einem fahrzeugseitigen Datenbus, zum Beispiel einem CAN-Bus.

In Figur 7 ist an einem Kupplungsarm 111 ein Kuppelelement 114 angeordnet, das einen Winkelsensor 42 umfasst, der einen weiteren Betriebszustandsensor 38 darstellen kann. Anstelle des Kuppelelements 14 könnte also auch das Kuppelelement 114 am Kupplungsarm 11 der Anhängekupplung 10 befestigt sein.

Der Winkelsensor 42 wird von einem Sensorgeber 39 betätigt. Der Sensorgeber 39 umfasst beispielsweise einen Ring 40, der vorzugsweise im Bereich des Äquators des als Kupplungskugel ausgestalteten Kuppelelements 114 angeordnet ist. Der Ring 40 ist drehbar am Kuppelelement 114 gelagert, so dass er von einem Anhänger A mitgenommen werden kann, wenn sich dieser relativ zum Kraftfahrzeug 100 dreht, beispielsweise bei einer Kurvenfahrt. Dies ist durch eine Drehbewegung 41 in der Zeichnung angedeutet. An dem Sensorgeber 39 sind beispielsweise optische Geber, zum Beispiel Schwarz-Weiß-Markierungen, Gebermagnete oder dergleichen angeordnet, um den Winkelsensor 42 zu betätigen, der zum Beispiel einen optischen Sensor und/oder einen magnetischen Sensor, insbesondere einen induktiven Sensor umfasst.

Es ist auch möglich, dass der Winkelsensor 42 (es können auch mehrere Winkelsensoren vorgesehen sein) berührungslos eine jeweilige Stellung der Anhängers A relativ zum Zugfahrzeug oder Kraftfahrzeug 100 erfasst. Es ist zum Beispiel möglich, dass der Winkelsensor 42 ein optischer Sensor ist, der eine Relativposition einer Kupplungs-Aufnahme 106 oder Kugelpfanne einer Kupplungsvorrichtung K erfasst.

Der Winkelsensor 42 oder die Winkelsensoren 42 können auch induktive Sensoren sein, die eine Änderung eines magnetischen Flusses erfassen können, der beispielsweise durch einen oder mehrere Magnete an der Kupplung K oder der Kupplungs-Aufnahme 106 bewirkt wird. Besonders bevorzugt ist eine Anordnung, dass der oder die Winkelsensoren 42 induktive Sensoren sind, die einen Erzeuger 42a zur Erzeugung eines magnetischen Flusses an Bord haben oder jedenfalls mit einem an Bord der Anhängekupplung 10 vorhandenen Erzeuger 42a zusammen wirken. Der Erzeuger 42a erzeugt ein magnetisches Feld, beispielsweise wenn er als Permanentmagnet oder Elektro-Magnet ausgestaltet ist. Die Änderung des Feldes des Erzeugers 42a durch die Kupplungsvorrichtung K ist durch den Winkelsensor 42 erfassbar.

Der Betriebszustandsensor 38 sendet beispielsweise ein Betriebszustandsignal 44 an die Auswerteeinrichtung 50.

An dem Kuppelelement 114 sind weiterhin Objektsensoren 43 angeordnet, beispielsweise optische Sensoren, die durch die Kupplungsvorrichtung K des Lastenträgers L oder auch durch beispielsweise eine Schließbacke einer Zugkugelkupplung des Anhängers A betätigbar sind und somit eine Nutzung des Kuppelelements 114 durch ein an diesem angreifendes Objekt, nämlich den Anhänger A oder den Lastenträger L, signalisieren.

Der Winkelsensor 42 sendet beispielsweise ein Winkelsignal 45 an die Auswerteeinrichtung 50.

Die Auswerteeinrichtung hat eine Sensorschnittstelle 57 zum Empfang beispielsweise der Betriebszustandsignale 36, 37, 44.

Der Kupplungsarm 11, 111 ist beispielsweise durch einen Antrieb 23, zum Beispiel einen Elektromotor, zwischen der Gebrauchsstellung G und der Nichtausstellung N verstellbar. Der Antrieb 23 wird von einer Steuerungseinrichtung 24 angesteuert, der sozusagen z.B. anhand eines Stromwerts eines Stroms zum Betreiben des Antriebs 23 weiß, welche Stellung der Kupplungsarm 11 einnimmt. Die jeweiligen Endlagen entsprechen nämlich der Gebrauchsstellung G und der Nichtgebrauchsstellung N.

Die Steuerungseinrichtung 24 erzeugt ein Antriebssignal 47, das die jeweilige Stellung G oder N repräsentiert und somit ein Gebrauchsstellungssignal darstellt.

Eine weitere Variante wird im Zusammenhang mit einer Verriegelung des Kupplungsarms 11 in der Gebrauchsstellung G und oder der Nichtgebrauchsstellung N deutlich. Beispielsweise ist ein Formschlusselement 26 in eine Formschlussaufnahme 25 am Lagerelement 17 hinein verstellbar, um dieses ortsfest in der Gebrauchsstellung G und/oder der Nichtgebrauchsstellung N fest zu legen, also zu fixieren oder zu verriegeln. Ein Verriegelungssensor 46 erfasst die jeweilige Stellung des Formschlusselements 26, d.h. ob dieses den Kupplungsarm 11 verriegelt oder nicht. Der Verriegelungssensor 46 erzeugt in Abhängigkeit von der (Verriegelungs-)Stellung des Formschlusselements 26 ein Verriegelungssignal 48, so dass aus dem Verriegelungssignal 48, das die Auswerteeinrichtung 50 empfängt, ermittelbar ist, ob der Kupplungsarm 11, 111 verriegelt ist und somit beispielsweise die Gebrauchsstellung G oder die Nichtgebrauchsstellung N einnimmt.

In einem Schritt S1, sozusagen einer Initialisierungsphase, ermittelt das Auswertemodul 54 beispielsweise, ob das Kraftfahrzeug 100 gestartet ist oder nicht.

In einem Schritt S2 stellt das Auswertemodul 54 beispielsweise fest, dass die Anhängekupplung 10 ihre Nichtgebrauchsstellung N einnimmt, zum Beispiel anhand des Antriebssignals 47 und/oder des Verriegelungssignals 48 und/oder des vom Lagesensor 34 erzeugten Lagesignals bzw. Gebrauchsstellungssignals 35.

In dieser Phase werden die Betriebszustandsensoren 31, 32, 38 sozusagen initialisiert. Beispielsweise wird hier eine Nulllage oder Ausgangslage festgelegt. In diesem Zustand ist auch ermittelbar, ob der Kupplungsarm 11 unbeschädigt ist. Die Kraftsensoren, nämlich die Betriebszustandsensoren 31, 32 sind hier nämlich in einem Startzustand, der einen unbeschädigten Kupplungsarm 11 signalisieren soll. Auch eine Selbstdiagnose beispielsweise der Elektronik der Auswerteeinrichtung 50 ist in diesem Zustand vorteilhaft.

Weiterhin sind im Zustand S2 auch Startwerte festlegbar, d.h. dass beispielsweise ein Temperaturabgleich stattfindet, eine Tara von der Auswerteeinrichtung 50 berechnet wird oder dergleichen.

In einem Schritt S3 ermittelt das Auswertemodul 54 beispielsweise anhand eines Zustandwechsels des Antriebssignals 47 und/oder des Verriegelungssignals 48 oder auch anhand des Gebrauchsstellung des Gebrauchsstellungssignals 35, dass der Kupplungsarm 11 von der Nichtgebrauchsstellung N in die Gebrauchsstellung G verstellt worden ist. Gerade in dieser ersten Phase, bei der jedenfalls noch keine Belastung des Kupplungsarms 11 durch ein Objekt, beispielsweise den Anhänger A und/oder den Lastenträger L, zu erwarten ist, ist es vorteilhaft, wenn die Betriebszustandsensoren 31, 32 initialisiert werden.

Wenn dann in einem Schritt S4 eine Last an dem Kupplungsarm 11 angreift, zum Beispiel der Lastenträger L montiert und/oder die Anhängekupplung A angekuppelt wird, ermittelt das Auswertemodul 54 beispielsweise anhand der eingangs erläuterten Formeln (1) - (8) zunächst eine Stützlast, die am Kuppelelement 14 angreift.

In einem vorteilhaften nächsten Schritt S5 ermittelt das Auswertemodul 54 bzw. die Auswerteeinrichtung 50 eine Masse des Anhängers A, was eingangs erläutert worden ist.

Die Auswerteeinrichtung 50 meldet beispielsweise nur dann, wenn die Objektsensoren 43 signalisieren, dass das Kuppelelement 14 durch beispielsweise die Kupplungsvorrichtung K benutzt ist und das Gebrauchsstellungssignal 35 die Gebrauchsstellung G signalisiert, an das Bordnetz 103, dass die Anhängekupplung 10 genutzt wird. Auch hier meldet also die Auswerteeinrichtung 50 den Betriebszustand des Kupplungsarms 11 in Abhängigkeit von dessen Lage in der Gebrauchsstellung oder der Nichtgebrauchsstellung.

Die Auswerteeinrichtung 50 wertet beispielsweise nur dann das Winkelsignal 45 des Winkelsensors 42 aus, wenn der Kupplungsarm 11 die Gebrauchsstellung G einnimmt. Wenn sich also beispielsweise der Ring 40 in der Nichtgebrauchsstellung N dreht, wird das entsprechende Winkelsignal nicht an das Bordnetz 103 weitergegeben oder an der Anzeigeeinrichtung 56 ausgegeben, während die Auswerteeinrichtung 50 in der Gebrauchsstellung G das Winkelsignal ausgibt.

Der Lagesensor 34 kann auch zur Ermittlung einer Winkellage des Kupplungsarms 11 beispielsweise zu einer Horizontalen, ausgestaltet sein, was eine winkelabhängige Auswertung der Formeln (1) - (8) ermöglicht. Dann kann auch ein Drehmoment My, das der Lastenträger L auf das Kuppelelement 14 ausübt, ermittelt werden.

**Patentansprüche**

1. Anhängekupplung für ein Kraftfahrzeug (100), mit einem Kupplungsarm (11), wobei der Kupplungsarm (11) an einem Halter (12), der an dem Kraftfahrzeug (100) befestigt oder befestigbar ist, zwischen einer Gebrauchsstellung (G), in welcher der Kupplungsarm (11) nach hinten vor ein Heck des Kraftfahrzeugs (100) zum Ankuppeln eines Anhängers (A) oder eines Lastenträgers (L) vorsteht, und einer Nichtgebrauchsstellung (N) verstellbar ist, in welcher der Kupplungsarm (11) von dem Halter (12) entfernt oder näher zu dem Kraftfahrzeug (100) hinbewegt ist, wobei die Anhängekupplung (10) mindestens einen Betriebszustandsensor (31, 32, 38) zur Erfassung mindestens eines von einer Nutzung des Kupplungsarmes (11) abhängigen Betriebszustandes, insbesondere einer Winkelstellung des Anhängers (A) oder des Lastenträgers (L) relativ zu dem Kupplungsarm (11) und/oder einer Belastung des Kupplungsarms (11) durch den Anhänger (A) oder den Lastenträger (L), und zur Ausgabe eines den mindestens einen Betriebszustand repräsentierenden Betriebszustandsignals (36, 37, 44) aufweist, wobei sie eine Auswerteeinrichtung (50) zur Auswertung des Betriebszustandsignals (36, 37, 44) in Abhängigkeit von mindestens einem von der Gebrauchsstellung (G) des Kupplungsarms (11) abhängigen Gebrauchsstellungssignal (35) aufweist, **dadurch gekennzeichnet, dass** die Auswerteeinrichtung (50) zu einer Diagnose des mindestens einen Betriebszustandsensors (31, 32, 38) und/oder anhand eines Ausgangssignals mindestens einer mechanischen Komponente der Anhängekupplung (10), insbesondere des Kupplungsarms (11), ausgestaltet ist, wobei das Ausgangssignal beispielsweise bei einem mechanisch einwandfreien Kupplungsarm oder einer mechanisch einwandfreien, den Halter (12) tragenden und an dem Kraftfahrzeug (100) befestigbaren oder an dem Kraftfahrzeug (100) befestigten, Trägeranordnung (22) zum Halten der Anhängekupplung einen vordefinierten Wert hat.

2. Anhängekupplung nach Anspruch 1, **dadurch gekennzeichnet, dass** die Auswerteeinrichtung (50) zur Ermittlung mindestens eines Ausgangswerts des mindestens einen Betriebszustandsignals (36, 37, 44), das den Betriebszustand des Kupplungsarms (11) in einem nicht durch den Lastenträger (L) oder Anhänger (A) genutzten Zustand repräsentiert, in Abhängigkeit von dem Gebrauchsstellungssignal (35) ausgestaltet ist.

3. Anhängekupplung nach Anspruch 1 oder 2, **dadurch gekennzeichnet, dass** die Auswerteeinrichtung (50) zur Ermittlung des mindestens einen Ausgangswerts, während der Kupplungsarm (11) in der Nichtgebrauchsstellung (N) ist, und/oder während eines Zustandwechsels zwischen der Gebrauchsstellung (G) und der Nichtgebrauchsstellung (N) ausgestaltet ist.

4. Anhängekupplung nach einem der vorhergehenden Ansprüche, **dadurch gekennzeichnet, dass** die Auswerteeinrichtung (50) den mindestens einen Ausgangswert in einem vordefinierten Zeitfenster unmittelbar nach einem einen Übergang von der Nichtgebrauchsstellung (N) in die Gebrauchsstellung (G) des Kupplungsarms (11) repräsentierenden Zustandswechsel des mindestens einen Gebrauchsstellungssignals (35) ausgestaltet ist.

5. Anhängekupplung nach Anspruch 4, **dadurch gekennzeichnet, dass** die Auswerteeinrichtung (50) das Zeitfenster schließt und die Ermittlung des mindestens einen Ausgangswerts in Abhängigkeit von einem Zustandswechsel des mindestens einen Betriebszustandsignals (36, 37, 44) beendet.

6. Anhängekupplung nach einem der vorhergehenden Ansprüche, **dadurch gekennzeichnet, dass** das mindestens eine Gebrauchsstellungssignal (35) ein eine Verriegelung des Kupplungsarms (11) in der Gebrauchsstellung (G) und/oder der Nichtgebrauchsstellung (N) anzeigendes Verriegelungssignal (48) und/oder ein Antriebssignal (47) umfasst, das von einem Antrieb (23) zur insbesondere motorischen Verstellung des Kupplungsarms (11) zwischen der Nichtgebrauchsstellung (N) und der Gebrauchsstellung (G) oder einer diesen Antrieb (23) ansteuernden Steuerungseinrichtung (24) erzeugt wird, wobei das Antriebsignal von einer jeweiligen Stellung des Kupplungsarms (11) in der Gebrauchsstellung (G) oder der Nichtgebrauchsstellung (N) oder einer dazwischen liegenden Stellung abhängt.

7. Anhängekupplung nach einem der vorhergehenden Ansprüche, **dadurch gekennzeichnet, dass** der mindestens eine Betriebszustandsensor (31, 32, 38) oder ein Gebrauchsstellungssensor zur Erzeugung des Gebrauchsstellungssignals mindestens einen, insbesondere an dem Kupplungsarm (11) angeordneten, Lagesensor (34) oder Beschleunigungssensor (33) zur Erfassung einer Lage des Kupplungsarms (11) aufweist, wobei der Lagesensor (34) oder Beschleunigungssensor (33) zur Erzeugung des mindestens einen Gebrauchsstellungssignals (35) ausgestaltet ist.

8. Anhängekupplung nach einem der vorhergehenden Ansprüche, **dadurch gekennzeichnet, dass** der mindestens eine Betriebszustandsensor (31, 32, 38) oder ein Gebrauchsstellungssensor zur Erzeugung des Gebrauchsstellungssignals einen Beschleunigungssensor (33) zur Erfassung mindestens einer von der Erdbeschleunigung und/oder einer Beschleunigung des Kraftfahrzeugs (100) in Fahrzeuglängsrichtung abhängigen Kraftkomponente (Fx) umfasst.

9. Anhängekupplung nach einem der vorhergehenden Ansprüche, **dadurch gekennzeichnet, dass** der mindestens eine Betriebszustandsensor (31, 32, 38) oder ein Gebrauchsstellungssensor zur Erzeugung des Gebrauchsstellungssignals zur Erfassung einer in Fahrzeuglängsrichtung des Kraftfahrzeugs (100) abhängigen Zuglastkomponente oder Schublastkomponente ausgestaltet ist, und dass die Auswerteeinrichtung (50) insbesondere zur Erzeugung eines die Masse des Anhängers (A) repräsentierenden Zuglastsignals ausgestaltet ist.

10. Anhängekupplung nach einem der vorhergehenden Ansprüche, **dadurch gekennzeichnet, dass** der mindestens eine Betriebszustandsensor (31, 32, 38) einen, insbesondere optischen oder induktiven und/oder mit oder ohne einen beweglich an der Anhängekupplung gelagerten Sensorgeber betätigbaren Winkelsensor (42) zur Erfassung einer Winkelstellung des Anhängers (A) oder des Lastenträgers (L) relativ zu dem Kupplungsarm (11) und/oder einen Lastsensor, insbesondere einen Stützlastsensor, zur Erfassung einer Belastung des Kupplungsarms (11) durch den Anhänger (A) oder den Lastenträger (L) und/oder einen Objektsensor (43) zur Erfassung eines an dem Kupplungsarm (11), insbesondere einem Kuppelelement (14) zum Ankuppeln des Anhängers (A) oder des Lastenträgers (L), angreifenden Objekts, insbesondere einer Zugkugelkupplung, umfasst.

11. Anhängekupplung nach einem der vorhergehenden Ansprüche, **dadurch gekennzeichnet, dass** der das mindestens eine Betriebszustandsensor (31, 32, 38) an dem Kupplungsarm (11) oder einer den Halter (12) tragenden und zur Befestigung an dem Kraftfahrzeug (100) vorgesehenen oder an dem Kraftfahrzeug (100) befestigten Trägeranordnung (22) angeordnet ist.

12. Anhängekupplung nach einem der vorhergehenden Ansprüche, **dadurch gekennzeichnet, dass** die Auswerteeinrichtung (50) eine Datenschnittstelle, insbesondere eine Busschnittstelle zur Ankopplung an einen Datenbus des Kraftfahrzeugs (100), und/oder eine Anzeigeeinrichtung (56) zur Anzeige des mindestens einen Betriebszustandes aufweist.

13. Auswertemodul zur Auswertung eines Betriebszustandsignals (36, 37, 44) einer Anhängekupplung (10) für ein Kraftfahrzeug (100), die einen Kupplungsarm (11) aufweist, der Kupplungsarm (11) an einem Halter (12), der an dem Kraftfahrzeug (100) befestigt oder befestigbar ist, zwischen einer Gebrauchsstellung (G), in welcher der Kupplungsarm (11) nach hinten vor ein Heck des Kraftfahrzeugs (100) zum Ankuppeln eines Anhängers (A) oder eines Lastenträgers (L) vorsteht, und einer Nichtgebrauchsstellung (N) verstellbar ist, in welcher der Kupplungsarm (11) von dem Halter (12) entfernt oder näher zu dem Kraftfahrzeug (100) hinbewegt ist, wobei die Anhängekupplung (10) mindestens einen Betriebszustandsensor (31, 32, 38) zur Erfassung mindestens eines von einer Nutzung des Kupplungsarmes (11) abhängigen Betriebszustandes, insbesondere einer Winkelstellung des Anhängers (A) oder des Lastenträgers (L) relativ zu dem Kupplungsarm (11) und/oder einer Belastung des Kupplungsarms (11) durch den Anhänger (A) oder den Lastenträger (L), und zur Ausgabe eines den mindestens einen Betriebszustand repräsentierenden Betriebszustandsignals (36, 37, 44) aufweist, wobei das Auswertemodul (54) zur Auswertung des Betriebszustandsignals (36, 37, 44) in Abhängigkeit von mindestens einem von der Gebrauchsstellung (G) des Kupplungsarms (11) abhängigen Gebrauchsstellungssignal (35) ausgestaltet ist, **dadurch gekennzeichnet, dass** das Auswertemodul (54) im Zusammenhang mit einem Betrieb mit der Anhängekupplung (10) den mindestens einen Betriebszustandsensor (31, 32, 38) und/oder anhand eines Ausgangssignals mindestens eine mechanische Komponente der Anhängekupplung (10), insbesondere des Kupplungsarms (11), diagnostiziert, wobei das Ausgangssignal beispielsweise bei einem mechanisch einwandfreien Kupplungsarm oder einer mechanisch einwandfreien, den Halter (12) tragenden und an dem Kraftfahrzeug (100) befestigbaren oder an dem Kraftfahrzeug (100) befestigten, Trägeranordnung (22) zum Halten der Anhängekupplung einen vordefinierten Wert hat, wobei das Auswertemodul (54) Programmcode aufweist, der durch einen Prozessor (52) ausführbar ist, so dass der Prozessor (52) bei der Ausführung des Programmcodes im Zusammenhang mit einem Betrieb mit der Anhängekupplung (10) den Schritt der Auswertung des Betriebszustandsignals (36, 37, 44) in Abhängigkeit von mindestens einem von der Gebrauchsstellung (G) des Kupplungsarms (11) abhängigen Gebrauchsstellungssignal (35) und den Schritt der Diagnose des mindestens einen Betriebszustandsensors (31, 32, 38) und/oder der mindestens einen mechanischen Komponente der Anhängekupplung (10) durchführt.

14. Auswerteeinrichtung (50) mit einem Auswertemodul (54) nach Anspruch 13 und einem Prozessor (52) zur Ausführung des Programmcodes des Auswertemoduls (54).

**Claims**

1. Trailer coupling for a motor vehicle (100), having a coupling arm (11), wherein the coupling arm (11) can be adjusted, on a holder (12) which is fixed or can be fixed to the motor vehicle (100), between a usage position (G) in which the coupling arm (11) protrudes in a backwards direction in front of a rear of the motor vehicle (100) to couple a trailer (A) or a load carrier (L) and a non-usage position (N) in which the coupling arm (11) is removed from the holder (12) or moved closer towards the motor vehicle (100), whereby the trailer coupling (10) has at least one operating status sensor (31, 32, 38) to record at least one operating status independent from the use of the coupling arm (11), in particular an angular position of the trailer (A) or the load carrier (L) relative to the coupling arm (11) and/or a load placed on the coupling arm (11) by the trailer (A) or the load carrier (L), and to emit an operating status signal (36, 37, 44) which represents at least one operating status, whereby it has an evaluation device (50) to evaluate the operating status signal (36, 37, 44) depending on at least one usage position signal (35) which is dependent on the usage position (G) of the coupling arm (11), **characterised in that** the evaluation device (50) is designed to make a diagnosis of the at least one operating status sensor (31, 32, 38) and/or by means of an output signal at least one mechanical component of the trailer coupling (10), in particular the coupling arm (11), whereby the output signal for example has a pre-defined value in the case of a mechanically perfect coupling arm or a mechanically perfect carrier arrangement (22) which bears the holder (12) and can be fixed to the vehicle (100) or is fixed to the vehicle (100) to hold the trailer coupling.

2. Trailer coupling according to claim 1, **characterised in that** the evaluation device (50) is designed to determine at least one output value of the at least one operating status signal (36, 37, 44) which represents the operating status of the coupling arm (11) in a status of not used by the load carrier (L) or trailer (A) depending on the usage position signal (35).

3. Trailer coupling according to either claim 1 or 2, **characterised in that** the evaluation device (50) is designed to determine the at least one output value while the coupling arm (11) is in the non-usage position (N) and/or during a status change between the usage position (G) and the non-usage position (N).

4. Trailer coupling according to any one of the preceding claims, **characterised in that** the evaluation device (50) is designed to evaluate the at least one output value in a pre-defined time window immediately after a change in status of the at least one usage signal (35) representing the transition from the non-usage position (N) to the usage position (G) of the coupling arm (11).

5. Trailer coupling according to claim 4, **characterised in that** the evaluation device (5) closes the time window and the determination of the at least one output value ends depending on a change in status of the at least one operating status signal (36, 37, 44).

6. Trailer coupling according to any one of the preceding claims, **characterised in that** at least one usage position signal (35) comprises a locking signal (48) which displays a locking of the coupling arm (11) in the usage position (G) and/or the non-usage position (N) and/or a drive signal (47) which is generated by a drive (23) for the in particular motor adjustment of the coupling arm (11) between the non-usage position (N) and the usage position (G) or a control device (24) which controls this drive (23), whereby the drive signal depends on a respective position of the coupling arm (11) in the usage position (G) or the non-usage position (N) or a position lying between these.

7. Trailer coupling according to any one of the preceding claims, **characterised in that** the at least one operating status sensor (31, 32, 38) or a usage position sensor to generate the usage signal has at least one position sensor (34) or acceleration sensor (33), in particular arranged on the coupling arm (11), to determine a position of the coupling arm (11), whereby the position sensor (34) or acceleration sensor (33) is designed to generate the at least one usage position signal (35).

8. Trailer coupling according to any one of the preceding claims, **characterised in that** the at least one operating status sensor (31, 32, 38) or a usage position sensor to generate the usage signal comprises an acceleration sensor (33) to record at least one force component (Fx) which is dependent on the acceleration due to gravity and/or an acceleration of the vehicle in its longitudinal direction.

9. Trailer coupling according to any one of the preceding claims, **characterised in that** at least one operating status sensor (31, 32, 38) or a usage position sensor is designed to generate the usage position signal to record a tensile load component or shear load component dependent in a longitudinal direction of the motor vehicle (100), and **in that** the evaluation device (50) in particular is designed to generate a tensile load signal which represents the mass of the trailer (A) .

10. Trailer coupling according to any one of the preceding claims, **characterised in that** the at least one operating status sensor (31, 32, 38) comprises an in particular optical or inductive and/or with or without an angle sensor (42) which can be actuated by a sensor emitter movably mounted on the trailer coupling to record an angle position of the trailer (A) or the load carrier (L) relative to the coupling arm (11), and/or a load sensor, in particular a support load sensor, to record a load on the coupling arm (11) from the trailer (A) or the load carrier (L) and/or an object sensor (43) to record an object which comes into contact on the coupling arm (11), in particular a coupling element (14) to couple the trailer (A) or the load carrier (L), in particular a coupling head.

11. Trailer coupling according to any one of the preceding claims, **characterised in that** the at least one operating status sensor (31, 32, 38) is arranged on the coupling arm (11) or a carrier arrangement (22) which bears the holder (12) and is provided for fixing to the motor vehicle (100) or is fixed to the motor vehicle (100).

12. Trailer coupling according to any one of the preceding claims, **characterised in that** the evaluation device (50) has a data interface, in particular a bus interface, to connect to a data bus of the motor vehicle (100) and/or a display device (56) to display the at least one operating status.

13. Evaluation module to evaluate an operating status signal (36, 37, 44) of a trailer coupling (10) for a motor vehicle (100) having a coupling arm (11), which coupling arm (11) can be adjusted on a holder (12) which is fixed or can be fixed to the vehicle (100) between a usage position (G) in which the coupling arm (11) protrudes in a backwards direction in front of a rear of the motor vehicle (100) to couple a trailer (A) or a load carrier (L) and a non-usage position (N) in which the coupling arm (11) is removed from the holder (12) or moved closer towards the motor vehicle (100), whereby the trailer coupling (10) has at least one operating status sensor (31, 32, 38) to record at least one operating status independent from the use of the coupling arm (11), in particular an angular position of the trailer (A) or the load carrier (L) relative to the coupling arm (11) and/or a load placed on the coupling arm (11) by the trailer (A) or the load carrier (L), and to emit an operating status signal (36, 37, 44) which represents at least one operating status, whereby it has an evaluation module (54) to evaluate the operating status signal (36, 37, 44) depending on at least one usage position signal (35) which is dependent on the usage position (G) of the coupling arm (11), **characterised in that** the evaluation module (54) together with an operation with the trailer coupling (10) diagnoses the at least one operating status sensor (31, 32, 38) and/or using an output signal at least one mechanical component of the trailer coupling (10), in particular the coupling arm (11), whereby the output signal for example has a pre-defined value in the case of a mechanically perfect coupling arm or a mechanically perfect carrier arrangement (22) which bears the holder (12) and can be fixed to the vehicle (100) or is fixed to the vehicle (100) to hold the trailer coupling, whereby the evaluation module (54) contains program code which can be executed by a processor (52) such that when the program code is executed in connection with an operation with the trailer coupling (10), the processor (52) carries out the step of evaluating the operating status signal (36, 37, 44) depending on at least one usage position signal (35), independent of the usage position (G) of the coupling arm (11) and the step of diagnosing the at least one operating status sensor (31, 32, 38) and/or the at least one mechanical component of the trailer coupling (10).

14. Evaluation device (50) having an evaluation module (54) according to claim 13 and a processor (52) to execute the program code of the evaluation module (54).

## Revendications

1. Attelage pour un véhicule automobile (100), avec un bras d'attelage (11), dans lequel le bras d'attelage (11) est réglable au niveau d'un support (12) qui est fixé ou peut être fixé au véhicule automobile (100), entre une position d'utilisation (G), dans laquelle le bras d'attelage (11) dépasse vers l'arrière devant une partie arrière du véhicule automobile (100) pour l'attelage d'une remorque (A) ou d'un support de charge (L), et une position de non-utilisation (N), dans laquelle le bras d'attelage (11) est retiré du support (12) ou est déplacé plus près du véhicule automobile (100), dans lequel l'attelage (10) présente au moins un capteur d'état de fonctionnement (31, 32, 38) pour la détection d'au moins un état de fonctionnement dépendant d'une utilisation du bras d'attelage (11), en particulier d'une position angulaire de la remorque (A) ou du support de charge (L) par rapport au bras d'attelage (11) et/ou une sollicitation du bras d'attelage (11) par la remorque (A) ou le support de charge (L), et pour l'émission d'un signal d'état de fonctionnement (36, 37, 44) représentant l'au moins un état de fonctionnement, dans lequel il présente un dispositif d'évaluation (50) pour l'évaluation du signal d'état de fonctionnement (36, 37, 44) en fonction d'au moins un signal de position d'utilisation (35) dépendant de la position d'utilisation (G) du bras d'attelage (11), **caractérisé en ce que** le dispositif d'évaluation (50) est configuré pour un diagnostic de l'au moins un capteur d'état de fonctionnement (31, 32, 38) et/ou au moyen d'un signal de départ d'au moins un composant mécanique de l'attelage (10), en particulier du bras d'attelage (11), dans lequel le signal de départ présente une valeur prédéfinie par exemple pour un bras d'attelage sans défaut mécaniquement ou un agencement porteur (22) sans défaut mécaniquement, portant le support (12) et fixé au véhicule automobile (100) ou pouvant être fixé au véhicule automobile (100) pour le support de l'attelage.

2. Attelage selon la revendication 1, **caractérisé en ce que** le dispositif d'évaluation (50) est configuré pour la détermination d'au moins une valeur de départ de l'au moins un signal d'état de fonctionnement (36, 37, 44) qui représente l'état de fonctionnement du bras d'attelage (11) dans un état non utilisé par le support de charge (L) ou la remorque (A), en fonction du signal de position d'utilisation (35).

3. Attelage selon la revendication 1 ou 2, **caractérisé en ce que** le dispositif d'évaluation (50) est configuré pour la détermination de l'au moins une valeur de départ, pendant que le bras d'attelage (11) est dans la position de non-utilisation (N), et/ou pendant un changement d'état entre la position d'utilisation (G) et la position de non-utilisation (N).

4. Attelage selon l'une des revendications précédentes, **caractérisé en ce que** le dispositif d'évaluation (50) est configuré pour la détermination de l'au moins une valeur de départ dans une fenêtre de temps prédéfinie directement après un changement d'état représentant une transition de la position de non-utilisation (N) à la position d'utilisation (G) du bras d'attelage (11) de l'au moins un signal de position d'utilisation (35).

5. Attelage selon la revendication 4, **caractérisé en ce que** le dispositif d'évaluation (50) ferme la fenêtre de temps et termine la détermination de l'au moins une valeur de départ en fonction d'un état de changement de l'au moins un signal d'état de fonctionnement (36, 37, 44).

6. Attelage selon l'une des revendications précédentes, **caractérisé en ce que** l'au moins un signal de position d'utilisation (35) comporte un signal de verrouillage (48) montrant un verrouillage du bras d'attelage (11) dans la position d'utilisation (G) et/ou la position de non-utilisation (N) et/ou un signal d'entraînement (47) qui est généré par un entraînement (23) pour le réglage en particulier motorisé du bras d'attelage (11) entre la position de non-utilisation (N) et la position d'utilisation (G) ou un dispositif de commande (24) commandant cet entraînement (23), dans lequel le signal d'entraînement dépend d'une position respective du bras d'attelage (11) dans la position d'utilisation (G) ou la position de non-utilisation (N) ou une position intermédiaire.

7. Attelage selon l'une des revendications précédentes, **caractérisé en ce que** l'au moins un capteur d'état de fonctionnement (31, 32, 38) ou un capteur de position d'utilisation présente pour la génération du signal de position d'utilisation au moins un capteur de position (34) ou capteur d'accélération (33), en particulier agencé au niveau du bras d'attelage (11), pour la détection d'une position du bras d'attelage (11), dans lequel le capteur de position (34) ou capteur d'accélération (33) est configuré pour la génération de l'au moins un signal de position d'utilisation (35).

8. Attelage selon l'une des revendications précédentes, **caractérisé en ce que** l'au moins un capteur d'état de fonctionnement (31, 32, 38) ou un capteur de position d'utilisation comporte pour la génération du signal de position d'utilisation un capteur d'accélération (33) pour la détection d'au moins une composante de force (Fx) dépendant de l'accélération de la pesanteur et/ou d'une accélération du véhicule automobile (100) dans le sens longitudinal du véhicule.

9. Attelage selon l'une des revendications précédentes, **caractérisé en ce que** l'au moins un capteur d'état de fonctionnement (31, 32, 38) ou un capteur de position d'utilisation est configuré pour la génération du signal de position d'utilisation pour la détection d'une composante de charge de traction ou composante de charge de poussée dépendant dans le sens longitudinal du véhicule du véhicule automobile (100), et que le dispositif d'évaluation (50) est configuré en particulier pour la génération d'un signal de charge de traction représentant la masse de la remorque (A).

10. Attelage selon l'une des revendications précédentes, **caractérisé en ce que** l'au moins un capteur d'état de fonctionnement (31, 32, 38) comporte un capteur angulaire (42), en particulier optique ou inductif et/ou actionnable avec ou sans un émetteur de détection logé de manière mobile au niveau de l'attelage pour la détection d'une position angulaire de la remorque (A) ou du support de charge (L) par rapport au bras d'attelage (11) et/ou un capteur de charge, en particulier un capteur de charge d'appui, pour la détection d'une sollicitation du bras d'attelage (11) par la remorque (A) ou le support de charge (L) et/ou un capteur d'objet (43) pour la détection d'un objet agissant sur le bras d'attelage (11), en particulier un élément d'attelage (14) pour l'attelage de la remorque (A) ou du support de charge (L), en particulier un attelage de boule d'attelage.

11. Attelage selon l'une des revendications précédentes, **caractérisé en ce que** l'au moins un capteur d'état de fonctionnement (31, 32, 38) est agencé au niveau du bras d'attelage (11) ou d'un agencement porteur (22) portant le support (12) et prévu pour la fixation au véhicule automobile (100) ou fixé au véhicule automobile (100).

12. Attelage selon l'une des revendications précédentes, **caractérisé en ce que** le dispositif d'évaluation (50) présente une interface de données, en particulier une interface bus pour le couplage à un bus de données du véhicule automobile (100), et/ou un dispositif d'affichage (56) pour l'affichage de l'au moins un état de fonctionnement.

**13.** Module d'évaluation pour l'évaluation d'un signal d'état de fonctionnement (36, 37, 44) d'un attelage (10) pour un véhicule automobile (100) qui présente un bras d'attelage (11), le bras d'attelage (11) est ou peut être fixé à un support (12) qui est ou peut être fixé au véhicule automobile (100), peut être réglé entre une position d'utilisation (G), dans laquelle le bras d'attelage (11) dépasse vers l'arrière d'une partie arrière du véhicule automobile (100) pour l'attelage d'une remorque (A) ou d'un support de charge (L), et une position de non-utilisation (N), dans laquelle le bras d'attelage (11) est retiré du support (12) ou est déplacé plus près du véhicule automobile (100), dans lequel l'attelage (10) présente au moins un capteur d'état de fonctionnement (31, 32, 38) pour la détection d'au moins un état de fonctionnement dépendant d'une utilisation du bras d'attelage (11), en particulier d'une position angulaire de la remorque (A) ou du support de charge (L) par rapport au bras d'attelage (11) et/ou d'une sollicitation du bras d'attelage (11) par la remorque (A) ou le support de charge (L), et pour l'émission d'un signal d'état de fonctionnement (36, 37, 44) représentant l'au moins un état de fonctionnement, dans lequel le module d'évaluation (54) est configuré pour l'évaluation du signal d'état de fonctionnement (36, 37, 44) en fonction d'au moins un signal de position d'utilisation (35) dépendant de la position d'utilisation (G) du bras d'attelage (11), **caractérisé en ce que** le module d'évaluation (54) diagnostique en rapport avec un fonctionnement avec l'attelage (10) l'au moins un capteur d'état de fonctionnement (31, 32, 38) et/ou au moyen d'un signal de départ au moins un composant mécanique de l'attelage (10), en particulier du bras d'attelage (11), dans lequel le signal de départ présente une valeur prédéfinie par exemple pour un bras d'attelage sans défaut mécaniquement ou un agencement porteur (22) sans défaut mécaniquement, portant le support (12) et fixé au véhicule automobile (100) ou pouvant être fixé au véhicule automobile (100) pour le support de l'attelage, dans lequel le module d'évaluation (54) présente un code de programme qui est exécutable par un processeur (52) de sorte que le processeur (52) réalise lors de l'exécution du code de programme en rapport avec un fonctionnement avec l'attelage (10) l'étape d'évaluation du signal d'état de fonctionnement (36, 37, 44) en fonction d'au moins un signal de position d'utilisation (35) dépendant de la position d'utilisation (G) du bras d'attelage (11) et l'étape de diagnostic de l'au moins un capteur d'état de fonctionnement (31, 32, 38) et/ou de l'au moins un composant mécanique de l'attelage (10).

**14.** Dispositif d'évaluation (50) avec un module d'évaluation (54) selon la revendication 13 et un processeur (52) pour l'exécution du code de programme du module d'évaluation (54).

Fig.1

Fig.2

Fig.3

Fig.4

Fig.6

S1

S2

54

S3

S4

S5

**Fig.5**

106
114
K
A
42a 42
50
38
40
41
39
43
43
43
56
43
111

**Fig.7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011103345 U1
- DE 102012021352